# EUROPEAN PATENT APPLICATION

(11) **EP 4 166 371 A1**
(43) Date of publication of application: **19.04.2023**
(21) Application number: 22201306.2
(22) Date of filing: 13.10.2022
(51) Int. Cl.: B60L 3/00, H02J 7/00, H02M 1/32

(54) **ELECTRIC OR HYBRID VEHICLE INCLUDING A SAFETY SYSTEM FOR ELECTRICAL SAFETY**

(30) Priority: 18.10.2021 IT 202100026582
(71) Applicant: Iveco S.p.A., 10156 Torino (IT)
(72) Inventor: Moni, Manuele, 10156 Torino (IT)
(74) Representative: Fiume, Orazio

(57) **Abstract**

Electric or hybrid vehicle incorporating a vehicular propulsion electrical network (+COND, -COND) with a voltage exceeding 60V, a safety system arranged to be connected to the electrical network, to discharge the electrical capacity of the vehicular electrical network in the event of an accident, and a processing unit (VCU) operationally connected with the safety device to control and/or monitor its operation.

## Description

### Field of the invention

The present invention relates to the field of safety devices for electric or hybrid vehicles.

### State of the art

ISO 26262, entitled "Road vehicles - Functional safety", is an international standard for the functional safety of electrical and/or electronic systems installed in massproduced road vehicles, defined by the International Organization for Standardization (ISO) in 2011, and revised in 2018.

According to the risk analysis and assessment performed on the basis of the ISO 26262 standard, a safety mechanism is required to discharge the residual electrical capacity of the propulsion mains after disconnecting the propulsion batteries in emergency situations such as of an accident and, in general, for emergency situations which could result in an electric shock.

In the following, for convenience, we speak of an "accident" to mean any emergency situation that could lead to an electric shock.

In other words, for safety reasons it is necessary to reduce the voltage of the propulsion network to a value lower than 60 VDC.

It is known, in fact, that electric or hybrid vehicles are equipped with a low-voltage power supply network for powering auxiliary electrical, electronic and electromechanical devices and a propulsion network intended to power the propulsion motor(s).

In the course of the present description, the electric propulsion network is intended to be "high voltage", i.e. operating at a voltage higher than 60V DC.

The greater the capacity of the network, the greater the energy to be dissipated.

The Automotive Safety Integrity Level (ASIL) is a risk classification scheme defined by the ISO 26262 standard. This classification helps to define the safety requirements needed to be in line with the ISO 26262 standard. The ASIL is established by performing a risk analysis of a potential hazard by observing the severity, exposure and controllability of the vehicle-operating scenario. The safety objective for that hazard in turn carries the ASIL requirements. There are four ASILs identified by the standard: ASIL A, ASIL B, ASIL C, ASIL D. ASIL D imposes the most restrictive integrity requirements on the product and ASIL A the least one.

Regarding the safety function, it is necessary to discharge up to 6000 uF to bring the voltage of the vehicular power supply network from approximately 450 VDC up to 60 VDC in 0.5 s or less with ASIL C integrity level.

There are no known devices connected to the vehicular propulsion network capable of performing also this task with requirements such as to satisfy the ASIL C level. Unless specifically excluded in the detailed description that follows, what is described in this chapter is to be considered as an integral part of the detailed description.

### Summary of the invention

The object of the present invention is to propose a safety device intended to be connected to the vehicular propulsion network to guarantee the reduction of the potential difference to a value lower than or equal to 60 V in a time lower than or equal to 0.5 seconds.

The object of the present invention is to provide a dedicated safety device for performing a rapid discharge of the electrical capacity of the vehicular propulsion network in the event of an emergency.

The idea is that this device is independent of any further device connected to the same vehicular propulsion electrical network.

More in detail, the idea is that this safety device is directly controlled by a vehicular processing unit, which can be suitably programmed to cause the intervention of the safety device in the event of an accident. Therefore, a safety system is defined which includes the safety device and the processing unit.

At the same time, it is proposed an intrinsically safe device.

According to a preferred variant of the invention, the safety device is equipped with some sensors and the processing unit is configured not only to cause its intervention in the event of an accident, but preferably also for diagnostic needs.

According to a first preferred aspect of the invention, the safety device comprises a first and a second discharge line, parallel to each other and arranged to short-circuit the positive and negative conductors defining the vehicular propulsion line. For each discharge line, the short circuit is achieved by means of a dissipation resistor or discharge resistor.

According to a second preferred aspect of the invention, each discharge line includes an electro-actuated switch and in particular, while the switch of a first line is of the normally closed type, the switch of the second line is of the normally open type. This makes the device intrinsically safe, which even in the event of an accident, which leads to the interruption of communication between the processing unit and the safety device, the safety device would intervene in any case guaranteeing the safety of the vehicle.

Therefore, under normal conditions, the processing unit keeps the normally closed switch constantly energized to avoid short-circuiting the conductors of the vehicular propulsion electrical network.

According to a preferred variant of the invention, each switch is equipped with auxiliary contacts.

The auxiliary contacts are generally integral with the mobile unit of the main contacts. Therefore, if the main contacts switch from one condition to another condition, the auxiliary contacts also switch from one condition to another.

In particular, the normally open circuit-breaker is equipped with normally closed auxiliary contacts, while the normally closed circuit-breaker is equipped with normally open auxiliary contacts.

The state of the auxiliary contacts is monitored by the processing unit.

According to a further aspect of the invention, at least one current sensor is arranged to measure a discharge current along each of the discharge lines and a voltage sensor is arranged to measure the potential difference between the conductors of the vehicular propulsion network and preferably to redound the normally closed switch monitoring.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:

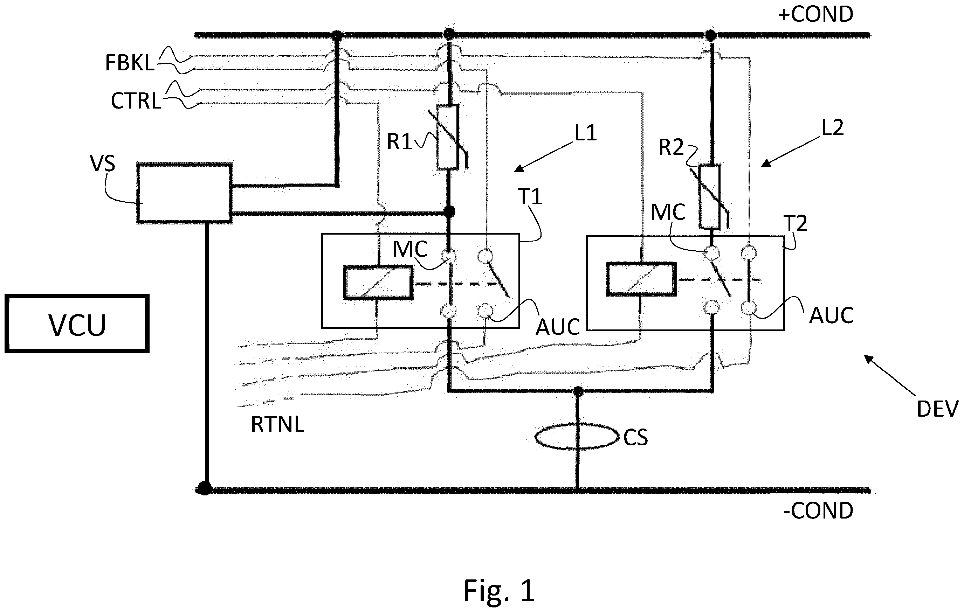

Figure 1 shows an electrical diagram of the safety device object of the present invention.

The same reference numbers and letters in the figures identify the same elements or components or functions.

It should also be noted that the terms "first", "second", "third", "superior", "inferior" and the like may be used herein to distinguish various elements. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description of preferred embodimets

Figure 1 shows an example of an electromechanical diagram of a safety device DEV according to the present invention. The device DEV is intended to be controlled and monitored by the VCU processing unit, preferably connectable to the device via one or more cable harnesses.

The diagram shows the positive +COND and negative -COND conductors of the vehicular propulsion network.

Obviously, the device can be connected to these conductors by means of an electrical connector not shown and per se known.

The device comprises a first discharge line L1 and a second discharge line L2.

Each line comprises a switch T1 and T2 and a discharge resistor R1 and R2.

Preferably, each discharge resistor is a positive gradient thermistor, generally indicated with the acronym PTC. The operating principle of the thermistors is based on the dependence of the resistance of the material on the temperature and in particular in PTCs, the resistance value increases with the temperature.

This effect is particularly advantageous since, as the temperature increases, the discharge current through the corresponding discharge line naturally decreases, thus avoiding dangerous situations.

According to a preferred variant of the invention, each discharge resistor is formed by the parallel of a plurality of discharge resistors, preferably more than two and even more preferably at least four or five.

As the number of discharge resistors in parallel on each of the discharge lines increases, the probability is reduced that one of them may have such a high resistance value that it does not allow the discharge of the vehicle propulsion network capacity in a predetermined time interval.

According to a preferred variant of the invention, the switch T1 of the first discharge line is of the normally closed type, while the switch of the second discharge line is of the normally open type.

This implies that the normally closed switch must be energized during normal operation of the propulsion network to avoid discharging it. However, this has the advantage of obtaining intrinsic safety in the event of malfunction or disconnection of the processing unit VCU arranged to control and monitor the safety device DEV.

An emergency situation is identified by said vehicular processing unit VCU which integrates one or more sensors or by a sensor operationally connected to the processing unit. In the event of an emergency, a signal representing the risk of electric shock is generated. It can be generated as a result of an impact, overturning, damage to a propulsion battery insulation, activation of an emergency button, interruption of an interlock signal caused by the disconnection of a connector on a propulsion power line. According to a preferred variant of the invention, each circuit breaker is equipped with auxiliary contacts AUC, which allow to know the closed or open state of the circuit breaker independently of the foreknowledge of the energized/de-energized state of the same.

Preferably, the auxiliary contacts of the switches are the inverse of the main MC contacts. In other words, if the main contact is of the normally open type, the auxiliary contact of the same switch is of the normally closed type and vice versa.

This fact is further advantageous because it further increases the intrinsic safety of the device.

In fact, if one considers, for example, that the first switch T1 which has the main contact MC normally closed, then when it is energized, i.e. under conditions of normal use of the vehicle, the auxiliary contacts AUC must be closed. If one considers for example the second switch T2 which has the main contact MC normally open, then when it is de-energized, i.e. under conditions of normal use of the vehicle, the auxiliary contacts AUC must be closed.

It can, therefore, be understood that, under normal operating conditions of the vehicle, both switches are open, while the relative auxiliary contacts are closed. Advantageously, the fact of having two independent discharge lines guarantees reliability of the discharge device over the years.

In addition, there are these further advantages:
1) the probability is reduced that common fault causes on the auxiliary contacts may not be detected before turning on the vehicle or before energizing the normally closed contactor;
2) it is ensured a continuous flow of current through the auxiliary contacts during normal operation of the vehicle, the probability of their oxidation is reduced.

The control lines CTRL are electrical lines that connect each switch T1 and T2 to the VCU processing unit that oversees the vehicle's functions. Through these lines, the processing unit is able to control the activation/deactivation of switches T1 and T2.

The FBKL electric lines connect the auxiliary contacts AUC to the processing unit VCU so that this can constantly monitor the opening/closing status of the corresponding main contacts MC.

Evidently, in order to be able to create a monitoring and/or control circuit, the presence of RTNL return lines is required, which allow each monitoring and/or control circuit to be closed on the processing unit. However, these are aspects known to those skilled in the art.

According to a preferred aspect of the invention, the discharge lines comprise an current sensor CS, preferably of the inductive type for monitoring the magnitude of the current circulating on the discharge lines L1 and L2 during a respective activation.

Preferably, the current sensor is unique for both discharge lines provided that the current sensor, even if it fails, cannot prevent the circulation of the discharge current. Preferably, a voltage sensor VS is arranged to measure the potential difference between the two conductors +COND and - COND of the propulsion network.

Both voltage VS and current sensors AS are operationally connected with the processing unit.

The processing unit is configured, in the event of an accident, to de-energize the normally closed switch and energize the normally open switch.

Preferably, the processing unit is configured to monitor the potential difference between the +COND and -COND conductors of the vehicular electrical network to define when it is no longer necessary to keep the normally open switch energized following its energization.

Preferably, the processing unit is further configured to monitor the discharge current and reopen the switches of the discharge lines when it detects a discharge current exceeding a predetermined threshold.

This situation can arise when the propulsion battery pack has not been disconnected from the propulsion electrical network and therefore, there is the concrete risk that the device DEV finds itself discharging the electrical energy contained in the propulsion batteries rather than the residual electrical capacity of the propulsion network. Preferably, the processing unit is configured to cyclically activate one of the two discharge lines to verify the correct operation of the relative switch and discharge resistors. In other words, it is about performing efficiency tests of the discharge lines. Some test examples are described in claim 9.

The decay time of the potential difference makes it possible to monitor the trend of the variable resistance of each thermistor during the discharge process.

When the processing unit detects an anomalous decay of the potential difference with respect to a predetermined one, a fault is recorded in the respective discharge line. According to a preferred variant of the invention, the voltage sensor VS comprises a further port connected to the discharge line at an intermediate point between the discharge resistor and the normally closed switch.

This fact makes it possible to redound the monitoring of the state of the switch most frequently used in normal operation of the vehicle.

In addition, thanks to this expedient, it is possible to measure the voltage drop on the discharge resistor independently of the voltage drop on the relative switch. Preferably, the efficiency tests are performed when the vehicle's instrument cluster is deactivated. In this way, the driver is in no way penalized by carrying out an efficiency test.

It is further worth pointing out that the discharge resistors R1 and R2 are sized in such a way as to allow a discharge of the capacity of the vehicle's propulsion network in about or less than 0.5 seconds. This is such a small interval that it would allow the test to be carried out even, for example, under vehicle sailing conditions. The sailing condition of the vehicle is per se known. According to a preferred variant of the invention, the device DEV comprises a peripheral processing unit directly installed in a casing of the device DEV itself, connected to the voltage and current sensors to carry out voltamperometric measurements. This peripheral processing unit is operatively connected to the processing unit VCU. According to another preferred variant of the invention, the voltage and current sensors are directly connected to the processing unit VCU.

The processing unit VCU comprises at least one inertial sensor such as to be able to autonomously detect a vehicle impact or an overturning of the same.

The processing unit is configured to command the discharge of the propulsion electric network capacity following the detection of an impact and/or vehicle overturning.

The present invention can advantageously be implemented through a computer program comprising coding means for carrying out one or more steps of the method, when this program is executed on a computer. Therefore, it is understood that the scope of protection extends to said computer program and also to computer-readable means comprising a recorded message, said computer-readable means comprising program coding means for carrying out one or more steps of the method, when said program is run on a computer.

Variants of the non-limiting example described are possible, without however departing from the scope of protection of the present invention, including all equivalent embodiments for a person skilled in the art, to the contents of the claims.

From the description given above, the person skilled in the art is capable of realizing the object of the invention without introducing further constructive details.

## Claims

1. Electric or hybrid vehicle including a vehicular (+COND, -COND) propulsion power grid with a voltage exceeding 60V, a safety system arranged to be connected to the power grid, to discharge the electric capacity of the vehicular power grid in the event of accident, the system including
- a safety device (DEV) for electric or hybrid vehicles arranged to be connected to a vehicular propulsion electrical network (+COND, -COND) with a voltage higher than 60V, the device comprising a first (L1) and a second discharge line (L2) arranged in parallel to each other to discharge an electrical capacity of the vehicular electrical network in the event of an accident, each discharge line comprising an electro-mechanical switch (T1, T2) and a discharge resistor (R1, R2) operatively arranged in series with the switch, so that each line is capable of short-circuiting the vehicular electrical network independently of each other,
- a processing unit (VCU) operationally connected with the safety device to control and/or monitor its operation.

2. The vehicle according to claim 1, wherein said first discharge line comprises said first switch (T1) and said second discharge line comprises said second switch (T2) and wherein said first switch is of the normally closed type and said second switch it is of the normally open type.

3. The vehicle according to claim 2, wherein said first switch comprises a normally closed main contact (MC) and an auxiliary contact (AUC) for monitoring a condition of the main contact, and wherein the auxiliary contact is of the normally open type and wherein said second switch comprises a normally open main contact (MC) and an auxiliary contact (AUC) for monitoring a condition of the main contact, and wherein the auxiliary contact is of the normally closed type.

4. The vehicle according to any one of the preceding claims 1 - 3, wherein each discharge resistor is a positive gradient resistance thermistor (PTC).

5. The vehicle according to claim 4, wherein each discharge resistor comprises two or more discharge resistors arranged in parallel with each other so as to form a current splitter.

6. The vehicle according to any one of the preceding claims, further comprising a voltage sensor (VS) arranged to measure a potential difference between the positive (+COND) and negative (-COND) conductors of the vehicular propulsion electrical network.

7. The vehicle according to any one of the preceding claims, further comprising a current sensor (CS) arranged to measure a discharge current of at least said first and second discharge lines (L1, L2).

8. The vehicle according to any one of the preceding claims wherein the processing unit is configured to perform at least one of the following operations:
- activation of the device: de-energization of said normally closed switch (T1) and energization of said normally open switch (T2) in response to a signal representative of an emergency condition,
- activation of the device: de-energization of said normally closed switch (T1) and energization of said normally open switch (T2) in response to a signal representing an emergency condition, and simultaneous monitoring of a decay of a discharge current passing through said first and second discharge line, and when said decay is anomalous, deactivation of the safety device;
- test: de-energizing of said normally closed switch (T1) or energizing of said normally open switch (T2) to carry out an efficiency test, monitoring a decay of a potential difference between conductors (+COND, -COND) of said electrical network propulsion vehicle, and when said decay is anomalous, signalling a malfunction of the safety device (DEV);
- test: de-energizing of said normally closed switch (T1) or energizing of said normally open switch (T2) to carry out an efficiency test, monitoring a decay of a discharge current passing through said first or second discharge line, and when said decay is anomalous, signalling a malfunction of the safety device (DEV);
- test: de-energizing of said normally closed switch (T1) or energizing of said normally open switch (T2) and carrying out a measurement of one or more values of the discharge resistance.

9. The vehicle according to claim 8, wherein said processing unit integrates or is connected with at least one device configured to provide said signal representing a risk of electric shock caused by an event including a collision, overturning, damage to an insulation of propulsion batteries, activation of an emergency button, interruption of an interlock signal caused by unplugging a connector on the propulsion power line.
